# DEMANDE DE BREVET EUROPEEN

(11) **EP 0 666 205 A1**
(43) Date de publication de la demande: **09.08.1995**
(21) Numéro de dépôt: 95400210.1
(22) Date de dépôt: 01.02.1995
(51) Int. Cl.: B60R 25/02

(54) **Dispositif antivol pour ensemble de colonne de direction notamment de véhicule automobile**

(30) Priorité: 03.02.1994 FR 9401230
(71) Demandeur: ECIA - EQUIPEMENTS ET COMPOSANTS POUR L'INDUSTRIE AUTOMOBILE, F-25400 Audincourt (FR)
(72) Inventeur: Mouhot, Frédéric, F-25420 Voujeaucourt (FR); Salez, Jean-Philippe, F-25700 Valentigney (FR); Hoblingre, André, F-25700 Valentigney (FR)
(74) Mandataire: Habasque, Etienne Joel Jean-François

(57) **Abrégé**

Ce dispositif dans lequel un arbre (1) est monté rotatif dans un corps (2) et comportant des moyens de blocage en rotation de l'arbre dans le corps, déplacables par un mécanisme de verrouillage (5) entre des positions de blocage et de libération de l'arbre par rapport au corps, les moyens de blocage comprenant un manchon (6) interposé entre l'arbre (1) et le corps (2), comportant des moyens d'accouplement (6a) adaptés pour coopérer avec des moyens complémentaires (1a) de l'arbre et du corps respectivement, pour bloquer l'arbre dans le corps et permettant un déplacement axial du manchon par le mécanisme de verrouillage, entre ses positions de blocage et de libération dans laquelle les moyens d'accouplement sont débrayés des moyens complémentaires, est caractérisé en ce que les moyens d'accouplement et les moyens complémentaires comprennent des extrémités correspondantes effilées facilitant leur engagement et en ce que le manchon (6) présente une course déterminée de déplacement angulaire entre le corps et l'arbre.

## Description

La présente invention concerne un dispositif antivol pour ensemble de colonne de direction notamment de véhicule automobile.

Plus particulièrement, l'invention se rapporte aux dispositifs antivol pour ensembles de colonne de direction, qui comportent un arbre de direction monté rotatif dans un corps de colonne, et dans lesquels il est prévu des moyens de blocage en rotation de l'arbre par rapport au corps, déplaçables par un mécanisme de verrouillage entre une position active de blocage et une position escamotée de libération de l'arbre par rapport au corps.

Différents modes de réalisation de ces dispositifs ont déjà été proposés.

De manière générale, ces dispositifs comprennent un mécanisme de verrouillage fixé sur le corps de colonne et commandé par exemple par une clé de verrouillage actionnée par un utilisateur, pour obtenir le déplacement d'un pène de verrouillage entre une position escamotée et une position active, dans laquelle ce pène s'engage à travers une lumière du corps et coopère avec des moyens de blocage en rotation de l'arbre par rapport à ce corps.

Ces moyens de blocage de l'arbre peuvent par exemple être constitués par des fentes ou des cannelures ménagées dans celui-ci ou dans une bague portée par cet arbre et reliée à celui-ci, par exemple par l'intermédiaire de moyens de friction, permettant à l'arbre de tourner par rapport à la bague lorsqu'un couple très important est appliqué sur celui-ci afin d'éviter toute dégradation de l'ensemble de colonne.

Cependant, ces dispositifs présentent un certain nombre d'inconvénients en cas de tentative de vol, car d'une part le mécanisme de verrouillage peut être désolidarisé du corps de colonne, ce qui permet la libération de l'arbre et d'autre part, le blocage en rotation de l'arbre dans le corps est obtenu par l'intermédiaire d'un pène, qui peut être cassé relativement facilement.

On connait également du document US-A-1 487 867, un dispositif antivol conforme au préambule de la revendication 1.

Cependant, ce dispositif présente un certain nombre d'inconvénients au niveau de l'engagement des moyens d'accouplement du manchon dans les moyens complémentaires correspondants de l'arbre.

Le but de l'invention est donc de résoudre ces problèmes en proposant un dispositif antivol qui soit simple et fiable.

A cet effet, l'invention a pour objet un dispositif antivol pour ensemble de colonne de direction notamment de véhicule automobile, du type comportant un arbre de direction monté rotatif dans un corps de colonne et des moyens de blocage en rotation de l'arbre par rapport au corps, déplacables par un mécanisme de verrouillage entre une position active de blocage et une position escamotée de libération de l'arbre par rapport au corps, les moyens de blocage comprenant un manchon interposé entre l'arbre et le corps, comportant des premiers et des seconds moyens d'accouplement adaptés pour coopérer avec des premiers et des seconds moyens complémentaires de l'arbre et du corps respectivement, pour bloquer en rotation l'arbre par rapport au corps et permettant un déplacement axial du manchon par le mécanisme de verrouillage, entre la position active de blocage et la position escamotée de libération, dans laquelle les premiers et/ou les seconds moyens d'accouplement sont débrayés des moyens complémentaires correspondants, caractérisé en ce que les moyens d'accouplement et les moyens complémentaires correspondants comprennent des extrémités correspondantes effilées facilitant leur engagement et en ce que le manchon présente une course déterminée de déplacement angulaire entre le corps et l'arbre.

L'invention sera mieux comprise à la lecture de la description qui va suivre, donnée uniquement à titre d'exemple et faite en se référant aux dessins annexés, sur lesquels :
- la Fig.1 représente une vue en coupe d'un dispositif antivol pour ensemble de colonne de direction selon l'invention, dans laquelle les moyens de blocage en rotation de l'arbre par rapport au corps sont représentés en position active;
- la Fig.2 représente une vue partielle en coupe analogue à celle de la Fig.1, dans laquelle les moyens de blocage sont représentés en position escamotée;
- la Fig.3 représente une vue partielle en coupe d'une variante de réalisation d'un dispositif antivol selon l'invention;
- la Fig.4 représente une vue en section d'un dispositif antivol selon l'invention;
- la Fig.5 illustre de façon schématique une phase d'engagement de moyens d'accouplement et de moyens complémentaires, respectivement d'un manchon et d'un arbre, entrant dans la constitution d'un dispositif selon l'invention; et
- la Fig.6 représente une vue de dessus d'une liaison entre un manchon et un mécanisme de verrouillage, entrant dans la constitution d'un dispositif selon l'invention.

Ainsi qu'on peut le voir sur ces figures, un ensemble de colonne de direction, notamment de véhicule automobile, comporte de manière générale un arbre de direction désigné par la référence 1 monté rotatif dans un corps de colonne de direction 2, par exemple par l'intermédiaire de paliers de guidage 3.

Un dispositif antivol désigné par la référence générale 4, est également prévu pour bloquer en rotation l'arbre dans le corps.

De manière classique, ce dispositif comporte des moyens de blocage déplaçables par un mécanisme de verrouillage entre une position active de blocage et une position escamotée de libération de l'arbre par rapport au corps.

Le mécanisme de verrouillage pouvant présenter n'importe quelle structure connue appropriée, il ne sera pas décrit plus en détail par la suite.

On notera cependant que ce mécanisme comporte par exemple un doigt 5 de déplacement axial des moyens de blocage qui sont désignés par la référence 6 sur ces figures.

Les moyens de blocage 6 comprennent un manchon interposé entre l'arbre 1 et le corps de colonne 2 et comportant par exemple sur ses surfaces interne et externe des premiers et des seconds moyens d'accouplement adaptés pour coopérer avec des premiers et des seconds moyens complémentaires de l'arbre et du corps respectivement.

Les premiers et les seconds moyens d'accouplement de ce manchon, sont désignés par les références 6a et 6b respectivement.

Les premiers moyens complémentaires de l'arbre sont désignés par la référence la, tandis que les seconds moyens complémentaires du corps sont désignés par la référence 2a.

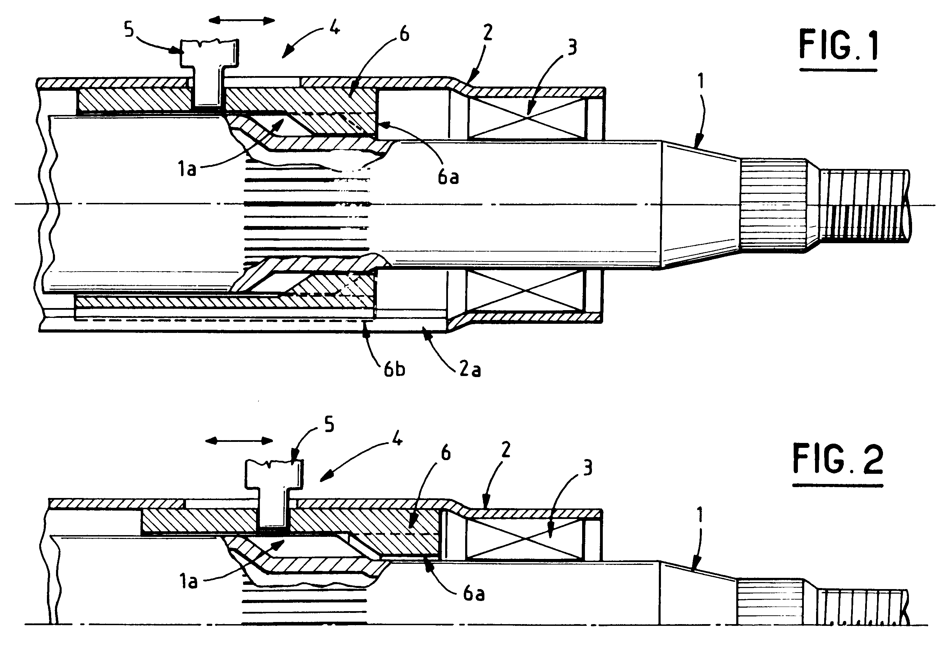

Comme cela sera décrit plus en détail par la suite, ce manchon, ces moyens d'accouplement et ces moyens complémentaires sont adaptés pour bloquer en rotation l'arbre par rapport au corps lorsque les moyens de blocage sont en position active et autorisent un déplacement axial du manchon de cette position active représentée sur la figure 1 vers une position escamotée représentée sur la figure 2 sous la commande du mécanisme de verrouillage.

En fait, ces moyens d'accouplement et complémentaires peuvent être constitués par des parties en saillie et en creux complémentaires du corps, du manchon et de l'arbre, adaptées pour coopérer les unes avec les autres comme cela sera décrit plus en détail par la suite.

Dans l'exemple de réalisation représenté sur les figures 1 et 2, le manchon de blocage 6 est monté déplaçable axialement entre une position active représentée sur la figure 1 dans laquelle les premiers moyens d'accouplement 6a de ce manchon 6 coopèrent avec les premiers moyens complémentaires la de l'arbre 1 pour bloquer l'arbre en rotation dans le corps par coopération de ses seconds moyens d'accouplement 6b avec les seconds moyens complémentaires 2a du corps, et une position escamotée.

Dans la position escamotée représentée sur la figure 2, les premiers moyens d'accouplement 6a du manchon de blocage 6 sont débrayés des premiers moyens complémentaires la de l'arbre, de sorte que celui-ci peut tourner librement par rapport au manchon et donc par rapport au corps de colonne.

On conçoit que cette structure présente un certain nombre d'avantages par rapport aux structures classiques à pène de verrouillage dans la mesure où le manchon de blocage est interposé entre l'arbre de direction et le corps de colonne et ne peut donc pas être arraché lors d'une tentative de vol.

Par ailleurs, le couple appliqué sur l'arbre, par exemple lors d'une tentative de vol, est réparti sur plusieurs parties en saillie et en creux complémentaires de cet arbre, du manchon et du corps de sorte que les risques de dégradation de l'ensemble de colonne sont réduits par rapport aux structures classiques.

Enfin, l'interposition du manchon de blocage entre l'arbre et le corps permet également un gain de place à l'extérieur de celui-ci.

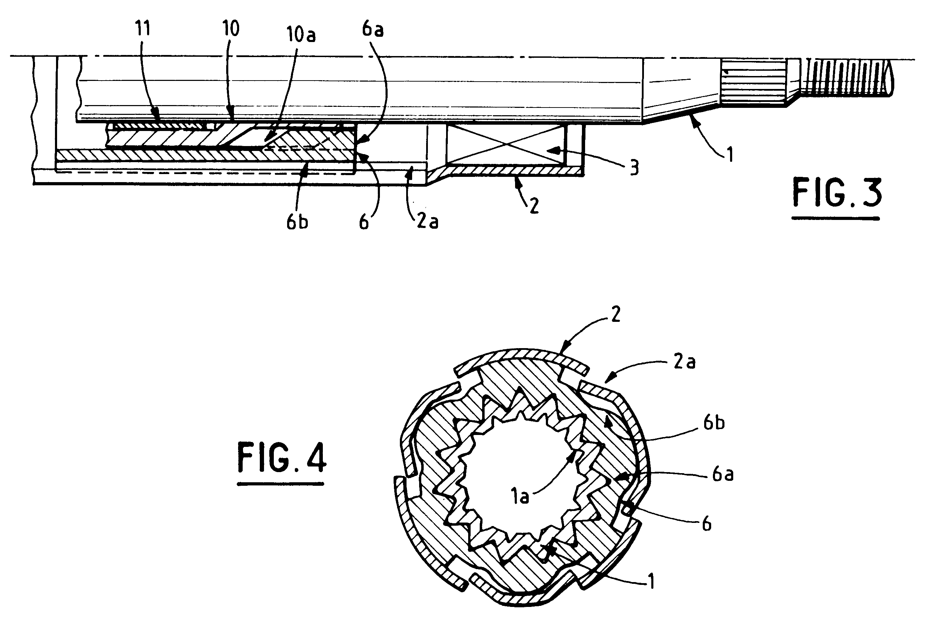

Il va de soi bien entendu que d'autres modes de réalisation peuvent être envisagés comme celui représenté sur la figure 3, dans laquelle on reconnaît l'arbre de direction 1, le corps de colonne 2 et le palier 3.

Le dispositif antivol comporte toujours le manchon 6 déplaçable axialement entre une position active et une position escamotée et muni par exemple sur sa surface externe des seconds moyens d'accouplement 6b adaptés pour coopérer avec les seconds moyens complémentaires 2a du corps 2 et par exemple sur sa surface interne des premiers moyens d'accouplement 6a adaptés pour coopérer avec des premiers moyens complémentaires 10a d'une bague 10 portée par cet arbre 1 et reliée à celui-ci par l'intermédiaire de moyens de friction 11.

Cette structure à bague et moyens de friction forme des moyens de limitation de transmission de couple entre l'arbre et le corps en provoquant par exemple un découplage de l'arbre de direction 1 de la bague 10 lorsque le couple appliqué sur cet arbre est supérieur à la résistance de la liaison entre cet arbre et la bague engendrée par les moyens de friction 11.

On conçoit alors que l'arbre peut tourner de façon freinée, dans cette bague 10, pour éviter toute dégradation du reste de l'ensemble de colonne.

Un exemple de réalisation des parties en saillie et en creux complémentaires du corps, de l'arbre et du manchon est représenté sur la figure 4, dans laquelle on reconnaît le corps 2, le manchon 6 et l'arbre de direction 1.

Ainsi qu'on l'a mentionné précédemment, les premiers et les seconds moyens d'accouplement et les premiers et les seconds moyens complémentaires peuvent être constitués par des parties en saillie et en creux complémentaires de cet arbre, du manchon et du corps, adaptées pour bloquer l'arbre en rotation dans le corps tout en permettant un déplacement axial du manchon entre ses positions active et escamotée par le mécanisme de verrouillage.

Dans l'exemple de réalisation décrit en regard de la figure 4, les premiers moyens d'accouplement 6a du manchon 6 et les moyens complémentaires la de l'arbre 1 sont constitués par des portions de cannelures complémentaires adaptées par s'engager les unes dans les autres lorsque le manchon est en position active comme représenté sur cette figure.

Les seconds moyens d'accouplement 6b du manchon 6 et les moyens complémentaires 2a du corps peuvent être constitués par des gorges axiales 6b du manchon dans lesquelles s'engagent des pattes en saillie vers l'intérieur 2a du corps, ces pattes étant obtenues par exemple par emboutissage du corps et permettant de guider le déplacement axial du manchon dans le corps tout en bloquant celui-ci en rotation.

On notera cependant qu'un jeu angulaire est prévu entre le corps et le manchon et plus particulièrement entre les moyens d'accouplement et les moyens complémentaires de ceux-ci comme cela est visible sur la figure 4, pour permettre à ce manchon de se déplacer sur une course angulaire déterminée entre le corps et l'arbre comme cela sera décrit plus en détail par la suite.

Bien entendu, d'autres modes de réalisation peuvent être envisagés et il va de soi également qu'une disposition inverse des premiers et des seconds moyens d'accouplement et des premiers et des seconds moyens complémentaires peut être envisagée.

Dans ce cas, ce sont les seconds moyens d'accouplement entre le corps et le manchon qui sont débrayables, lorsque le manchon est en position escamotée.

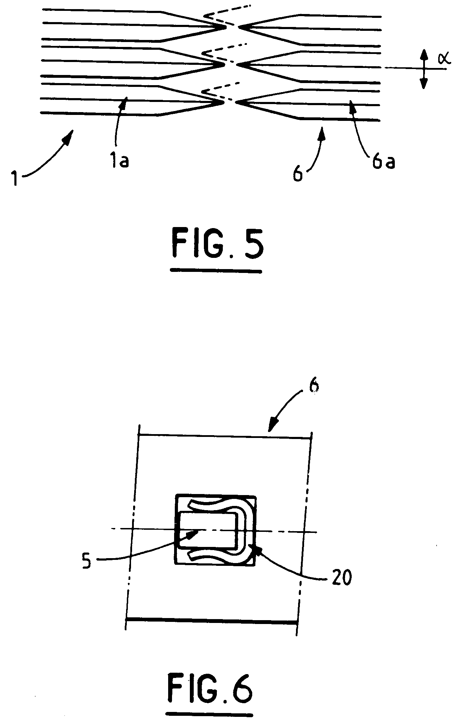

Selon l'invention, les extrémités correspondantes des moyens d'accouplement et des moyens complémentaires correspondants débrayables du manchon et du corps et/ou de l'arbre, sont effilées et le manchon présente une course déterminée de déplacement angulaire a entre le corps et l'arbre comme cela est illustré sur la figure 5.

Avantageusement, cette course a correspond au pas de ces moyens d'accouplement et complémentaires afin de faciliter l'engagement de ces moyens en position de blocage de l'arbre dans le corps quelle que soit leur position relative au moment du déclenchement du mécanisme de verrouillage par l'utilisateur.

De plus, il peut également être prévu des moyens de sollicitation élastiques du manchon en position intermédiaire de sa course de déplacement angulaire.

Comme on peut le voir sur la figure 6, ces moyens élastiques désignés par la référence 20 peuvent être interposés entre le mécanisme de verrouillage et plus particulièrement le doigt 5 de celui-ci et le manchon 6 et plus particulièrement les bords d'un évidement de celui-ci destiné à recevoir ce doigt, pour solliciter celui-ci en position intermédiaire ou neutre de sa course et lui permettre de se déplacer angulairement dans une direction ou dans l'autre pour obtenir un engagement immédiat des moyens d'accouplement et complémentaires débrayables du manchon et de l'arbre lorsque le mécanisme de verrouillage est déclenché par l'utilisateur, ce qui permet de garantir un blocage immédiat de l'arbre dans le corps, c'est à dire sans nécessité de déplacement angulaire de l'arbre comme c'était le cas avec les dispositifs de l'état de la technique.

## Revendications

1. Dispositif antivol pour ensemble de colonne de direction notamment de véhicule automobile, du type comportant un arbre de direction (1) monté rotatif dans un corps de colonne (2) et des moyens de blocage en rotation de l'arbre par rapport au corps, déplacables par un mécanisme de verrouillage (5) entre une position active de blocage et une position escamotée de libération de l'arbre par rapport au corps, les moyens de blocage comprenant un manchon (6) interposé entre l'arbre (1) et le corps (2), comportant des premiers et des seconds moyens d'accouplement (6a,6b) adaptés pour coopérer avec des premiers et des seconds moyens complémentaires (1a,2a) de l'arbre et du corps respectivement, pour bloquer en rotation l'arbre par rapport au corps et permettant un déplacement axial du manchon (6) par le mécanisme de verrouillage, entre la position active de blocage et la position escamotée de libération, dans laquelle les premiers et/ou les seconds moyens d'accouplement sont débrayés des moyens complémentaires correspondants, caractérisé en ce que les moyens d'accouplement et les moyens complémentaires correspondants comprennent des extrémités correspondantes effilées facilitant leur engagement et en ce que le manchon (6) présente une course déterminée (α) de déplacement angulaire entre le corps et l'arbre.

2. Dispositif selon la revendication 1, caractérisé en ce que les premiers moyens d'accouplement (6a) sont débrayables des premiers moyens complémentaires (1a).

3. Dispositif selon la revendication 1 ou 2, caractérisé en ce que les premiers moyens complémentaires de l'arbre (1) sont formés sur une bague (10) portée par l'arbre et reliée à celui-ci par des moyens de friction (11).

4. Dispositif selon l'une quelconque des revendications précédentes, caractérisé en ce que les moyens d'accouplement et les moyens complémentaires sont formés par des parties en saillie et en creux axiales complémentaires du corps, du manchon et de l'arbre.

5. Dispositif selon la revendication 4, caractérisé en ce que les parties en saillie et en creux axiales se présentent sous la forme de cannelures.

6. Dispositif selon l'une quelconque des revendications précédentes, caractérisé en ce que la course déterminée (α) de déplacement angulaire du manchon (6) correspond au pas des moyens d'accouplement et complémentaires.

7. Dispositif selon la revendication 6, caractérisé en ce qu'il comporte des moyens de sollicitation élastiques (20) du manchon (6) en position angulaire intermédiaire de la course.

8. Dispositif selon la revendication 7, caractérisé en ce que les moyens (20) de sollicitation sont interposés entre le manchon (6) et le mécanisme de verrouillage (5).

9. Dispositif selon l'une quelconque des revendications précédentes, caractérisé en ce que les premiers et les seconds moyens d'accouplement du manchon (6) sont ménagés sur les surfaces interne et externe de celui-ci.
